# EUROPÄISCHE PATENTANMELDUNG

(11) **EP 3 744 747 A1**
(43) Veröffentlichungstag der Anmeldung: **02.12.2020**
(21) Anmeldenummer: 19176689.8
(22) Anmeldetag: 27.05.2019
(51) Int. Cl.: C08G 18/48, B01D 3/34, C08G 18/73, C08G 18/82, C08G 18/10

(54) **VERBESSERTE DESTILLIERFÄHIGKEIT DURCH VERDÜNNUNG MIT ABZUTRENNENDER KOMPONENTE**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft ein Verfahren zur Aufreinigung mindestens eines Umsetzungsproduktes mindestens eines Diisocyanates umfassend mindestens die folgenden Schritte (A) Bereitstellen einer Mischung A mindestens enthaltend das mindestens eine Umsetzungsprodukt des mindestens einen Diisocyanates und gegebenenfalls das mindestens eine Diisocyanat, (B) Zugabe von, gegebenenfalls weiterem, mindestens einen Diisocyanat zu Mischung A aus Schritt (A), um eine Mischung B zu erhalten, und (C) destillative Abtrennung des mindestens einen Diisocyanates aus Mischung B aus Schritt (B), um das aufgereinigte mindestens eine Umsetzungsprodukt des mindestens einen Diisocyanates zu erhalten. Des Weiteren umfasst die vorliegende Erfindung das Umsetzungsprodukt mindestens eines Diisocyanates, erhältlich durch das erfindungsgemäßen Verfahrens und dessen Verwendung zur Herstellung von Polyurethanschäumen, Polyurethanhydrogelen, Polyurethanelastomeren, Lacken und Klebstoffen.

## Beschreibung

Die Erfindung betrifft ein Verfahren zur Aufreinigung mindestens eines Umsetzungsproduktes mindestens eines Diisocyanates umfassend mindestens die folgenden Schritte: (A) Bereitstellen einer Mischung A mindestens enthaltend das mindestens eine Umsetzungsprodukt des mindestens einen Diisocyanates und gegebenenfalls das mindestens eine Diisocyanat, (B) Zugabe von, gegebenenfalls weiterem, mindestens einen Diisocyanat zu Mischung A aus Schritt (A), um eine Mischung B zu erhalten, und (C) destillative Abtrennung des mindestens einen Diisocyanates aus Mischung B aus Schritt (B), um das aufgereinigte mindestens eine Umsetzungsprodukt des mindestens einen Diisocyanates zu erhalten. Des Weiteren umfasst die vorliegende Erfindung das Umsetzungsprodukt mindestens eines Diisocyanates, erhältlich durch das erfindungsgemäße Verfahren und dessen Verwendung zur Herstellung von Polyurethanschäumen, Polyurethanhydrogelen, Polyurethanelastomeren, Lacken und Klebstoffen.

Durch Modifikation von Diisocyanaten, beispielsweise Trimerisierung, Umsetzung des mindestens einen Diisocyanates mit Polyolen unter Erhalt von NCO-terminierten Prepolymeren, Harnstoffbildung, Urethanisierung, Biuretisierung, Allophanatisierung oder Kombinationen dieser Reaktionen entstehen die entsprechenden Polyisocyanate, wobei stets ein Rest an nicht umgesetztem, monomerem Diisocyanat im Rohprodukt verbleibt. Dieser Rest wird üblicherweise durch eine Destillation im Vakuum entfernt und nach Kondensation wiederverwertet. Häufig bereitet dabei eine zu hohe Viskosität, beispielsweise größer als 500 mPas, des Rohproduktes Probleme, da diese die Verteilung im Destillationsapparat ungünstig beeinflusst. Teilweise werden spezielle Pumpen erfordert, die für das Fördern hochviskoser Flüssigkeiten ausgelegt sind.

Verfahren zur Umsetzung von Diisocyanaten und zur Aufarbeitung der nach der Umsetzung erhaltenen Reaktionsmischungen sind dem Fachmann an sich bekannt. WO 2018/076199 und EP 0 010 589 A1 offenbaren jeweils Verfahren zur Herstellung von Trimeren basierend auf 2,4- und/oder 2,6-Toluol-diisocyanat und ein destillatives Verfahren zur Aufreinigung des erhaltenen Produkts. Gemäß der US 4,255,569 wird ein Verfahren zur Herstellung eines Trimersierungsproduktes eines Diisocyanates beschrieben. Für die destillative Aufreinigung der erhaltenen Reaktionsmischung wird ein inertes Destillationshilfsmittel zugegeben.

Ausgehend von diesem Stand der Technik lag der vorliegenden Erfindung die Aufgabe zu Grunde, mindestens einen, vorzugsweise mehrere der oben genannten Nachteile des Standes der Technik zu beheben. Insbesondere lag der vorliegenden Erfindung die Aufgabe zu Grunde, ein Verfahren zur Aufreinigung von Umsetzungsprodukten von Diisocyanaten bereitzustellen, bei dem die bislang vorherrschenden Nachteile, beispielsweise eine unzureichende Förderbarkeit des Rohproduktes bzw. eine unzureichende Trennleistung in der Destillation, vermieden werden können. Weiterhin ist es eine Aufgabe der vorliegenden Erfindung, ein entsprechendes Verfahren bereitzustellen, welches zum einen das gewünschte Produkt in einer hohen Reinheit, d.h. mit einem geringen Restgehalt an Monomeren, und zum anderen das abgetrennte Diisocyanat in einer hohen Qualität, d.h. in hoher Reinheit, zugänglich macht.

Diese Aufgabe wurde erfindungsgemäß gelöst durch das Verfahren zur Aufreinigung mindestens eines Umsetzungsproduktes mindestens eines Diisocyanates umfassend mindestens die folgenden Schritte:
(A) Bereitstellen einer Mischung A mindestens enthaltend das mindestens eine Umsetzungsprodukt des mindestens einen Diisocyanates und gegebenenfalls das mindestens eine Diisocyanat,
(B) Zugabe von, gegebenenfalls weiterem, mindestens einem Diisocyanat zu Mischung A aus Schritt (A), um eine Mischung B zu erhalten,
(C) Destillative Abtrennung des mindestens einen Diisocyanates aus Mischung B aus Schritt (B), um das aufgereinigte Umsetzungsprodukt des mindestens einen Diisocyanates zu erhalten.

Des Weiteren werden die Aufgaben erfindungsgemäß gelöst durch ein Umsetzungsprodukt mindestens eines Diisocyanates, erhältlich durch das erfindungsgemäße Verfahren, durch dessen Verwendung zur Herstellung von Polyurethanschäumen, Polyurethanhydrogelen, Polyurethanelastomeren, Lacken und Klebstoffen und durch ein Verfahren zur Herstellung von Polyurethanschäumen.

Die einzelnen Schritte des erfindungsgemäßen Verfahrens werden im Folgenden detailliert beschrieben:
Schritt (A) des erfindungsgemäßen Verfahrens umfasst das Bereitstellen einer Mischung A mindestens enthaltend das mindestens eine Umsetzungsprodukt des mindestens einen Diisocyanates und gegebenenfalls das mindestens eine Diisocyanat.

Im Allgemeinen kann durch das erfindungsgemäße Verfahren jedes dem Fachmann bekannte Umsetzungsprodukt mindestens eines Diisocyanates behandelt werden, so lange bei seiner Herstellung eine Mischung erhalten wird, die das Umsetzungsprodukt des mindestens einen Diisocyanates und gegebenenfalls das mindestens eine Diisocyanat enthält (Mischung A).

In einer bevorzugten Ausführungsform betrifft die vorliegende Erfindung das erfindungsgemäße Verfahren, wobei Mischung A erhalten wird durch Trimerisierung des mindestens einen Diisocyanates, Umsetzung des mindestens einen Diisocyanates mit Polyolen unter Erhalt von NCO-terminierten Prepolymeren, Harnstoffbildung, Urethanisierung, Biuretisierung, Allophanatisierung, Carbodiimidisierung, Uretdionbildung, Uretoniminbildung, Oxazolidonbildung, Amidbildung oder Kombinationen dieser Reaktionen.

Entsprechende Verfahren zur Durchführung der oben genannten Reaktionen sind dem Fachmann an sich bekannt und beispielsweise beschrieben in J. Prakt. Chem. 336 (1994) 185 - 200, DE-A 1 670 666, DE-A 1 954 093, DE-A 2 414 413, DE-A 2 452 532, DE-A 2 641 380, DE-A 3 700 209, DE-A 3 900 053, DE-A 3 928 503, EP-A 0 336 205, EP-A 0 339 396 und EP-A 0 798 299. Bevorzugt ist die Umsetzung des mindestens einen Diisocyanates mit mindestens einem Polyol, um NCO-terminierte Prepolymere zu erhalten. Die Umsetzung des mindestens einen Diisocyanates mit mindestens einem Polyol erfolgt beispielsweise bevorzugt bei einer Temperatur von 50 bis 130 °C, besonders bevorzugt bei 60 bis 120 °C. Geeignete Katalysatoren für die Umsetzung des mindestens einen Diisocyanates mit mindestens einem Polyol sind beispielsweise ausgewählt aus der Gruppe bestehend aus katalytisch aktiven Metallsalzen, Aminen, Amidinen, Guanidinen und Mischungen davon. Beispielhaft zu nennen sind Zinndibutyldilaurat (DBTL), Zinnacetat, 1,8-Diazabicyclo[5.4.0]undecen-7 (DBU), 1,5-Diazabicyclo[4.3.0]nonen-5 (DBN), 1,4-Diazabicyclo[3.3.0]octen-4 (DBO), N-Ethylmorpholin (NEM), Triethylendiamin (DABCO), Pentamethylguanidin (PMG), Tetramethylguanidin (TMG), Cyclotetramethylguanidin (TMGC), n-Decyltetramethylguanidin (TMGD), n-Dodecyltetramethylguanidin (TMGDO), Dimethylaminoethyltetramethylguanidin (TMGN), 1,1,4,4,5,5-Hexamethylisobiguanidin (HMIB), Phenyltetramethylguanidin (TMGP) und Hexamethylenoctamethylbiguanidin (HOBG).

Geeignete Polyole sind beispielsweise ausgewählt aus der Gruppe bestehend aus PolyetherPolyolen, Polyester-Polyolen, Polycarbonat-Polyolen, Polysiloxan-Polyolen und Mischungen davon. Besonders bevorzugt werden erfindungsgemäß Polyether-Polyole eingesetzt, insbesondere Polymerisate von Ethylenoxid und/oder Proplyenoxid.

Es ist erfindungsgemäß auch möglich, dass mehrere der oben genannten Reaktionen gleichzeitig stattfinden, so dass beispielsweise nach Durchführung der Reaktion eine Mischung erhalten wird, die neben dem Umsetzungsprodukt des mindestens einen Diisocyanates mit mindestens einem Polyole und dem Produkt der Trimerisierung des mindestens einen Diisocyanates das mindestens eine Diisocyanat an sich enthalten. Erfindungsgemäß bevorzugt enthält das in Schritt (A) des erfindungsgemäßen Verfahrens im Wesentlichen, d.h. zu mindestens 5 Gew.-%, bevorzugt zu mindestens 10 Gew.-%, besonders bevorzugt zu mindestens 30 Gew.-%, ein Umsetzungsprodukt mindestens eines Diisocyanates, insbesondere eines Diisocyanates.

Es ist erfindungsgemäß möglich und bevorzugt, dass in Schritt (A) eine Mischung erhalten wird, die das Umsetzungsprodukt des mindestens einen Diisocyanates und das mindestens eine Diisocyanat enthält. Es ist erfindungsgemäß auch möglich, aber weniger bevorzugt, dass in Schritt (A) eine Mischung erhalten wird, die das Umsetzungsprodukt des mindestens einen Diisocyanates, aber nicht das mindestens eine Diisocyanat, enthält.

Erfindungsgemäß ist das mindestens eine Diisocyanat ausgewählt aus der Gruppe bestehend aus Diisocyanaten mit aliphatisch, cycloaliphatisch, araliphatisch und/oder aromatisch gebundenen Isocyanatgruppen.

Besonders bevorzugt ist das mindestens eine Diisocyanat ausgewählt aus der Gruppe bestehend aus Hexamethylendiisocyanat (HDI), Isophorondiisocyanat (IPDI), Butylendiisocyanat (BDI), Pentamethylendiisocyanat (PDI), Bisisocyanatocyclohexylmethan (HMDI), 2,2,4-Trimethylhexamethylendiisocyanat, Bisisocyanatomethylcyclohexan, Bisisocyanatomethyltricyclodecan, Xylylendiisocyanat (XDI), Tetramethylxylylendiisocyanat, Norbornandiisocyanat, Cyclohexandiisocyanat, Toluol-2,4-diisocyanat (2,4-TDI), Toluol-2,6-diisocyanat (2,6-TDI), 2,2'-Methylendiphenyldiisocyanat (2,2'-MDI), 2,4'-Methylendiphenyldiisocyanat (2,4'-MDI), 4,4'-Methylendiphenyldiisocyanat (4,4'-MDI) und Mischungen davon.

Der Gehalt des mindestens einen Diisocyanates in Mischung A kann abhängig sein von der Reaktion, durch die das jeweilige Umsetzungsprodukt erhalten wird. Erfindungsgemäß bevorzugt enthält Mischung A das mindestens eine Diisocyanat in einer Menge von 0,1 bis 90 Gew.-%, besonders bevorzugt 2 bis 80 Gew.-%, jeweils bezogen auf Mischung A.

In dem erfindungsgemäßen Verfahren weist Mischung A bevorzugt eine Viskosität von 500 bis 50000 mPas, bevorzugt 1000 bis 10000 mPas, auf. Diese erhöhte Viskosität der erfindungsgemäß erhaltenen Mischung A ist für die notwendige Destillation zur Abtrennung des nicht umgesetzten mindestens einen Diisocyanates nachteilig.

Schritt (B) des erfindungsgemäßen Verfahrens umfasst die Zugabe von, gegebenenfalls weiterem, Diisocyanat zu Mischung A aus Schritt (A), um eine Mischung B zu erhalten.

Gemäß der erfindungsgemäßen Ausführungsform, dass in Schritt (A) eine Mischung A mindestens enthaltend das mindestens eine Umsetzungsprodukt des mindestens einen Diisocyanates und das mindestens eine Diisocyanat bereitgestellt wird, wird in Schritt (B) weiteres Diisocyanat zu der Mischung A aus Schritt (A) gegeben, um eine Mischung B zu erhalten.

Gemäß der erfindungsgemäßen Ausführungsform, dass in Schritt (A) eine Mischung A mindestens enthaltend das mindestens eine Umsetzungsprodukt des mindestens einen Diisocyanates, aber nicht das mindestens eine Diisocyanat bereitgestellt wird, wird in Schritt (B) Diisocyanat zu der Mischung A aus Schritt (A) gegeben, um eine Mischung B zu erhalten.

Erfindungsgemäß wird in Schritt (B) das gleiche mindestens eine Diisocyanat zugesetzt, welches auch bereits in Schritt (A) eingesetzt worden ist. Dies hat den erfindungsgemäßen Vorteil, dass in dem sich anschließenden Destillationsschritt (C) nur eine Verbindung abgetrennt werden muss, und nicht zwei oder mehr Verbindungen.

Bevorzugt wird in Schritt (B) des erfindungsgemäßen Verfahrens so viel des mindestens einen Diisocyanates zugegeben, dass die Viskosität der Mischung B niedrig genug ist, um erfindungsgemäß vorteilhaft destilliert zu werden. Bevorzugt weist Mischung B eine Viskosität von 100 bis 1400 mPas, bevorzugt 150 bis 1000 mPas, auf.

In einer bevorzugten Ausführungsform des erfindungsgemäßen Verfahrens wird in Schritt (B) das mindestens eine Diisocyanat in einer Menge von 1 bis 60 Gew.-%, bevorzugt 5 bis 50 Gew.-%, besonders bevorzugt 8 bis 45 Gew.-%, jeweils bezogen auf Mischung A, zugegeben. Entsprechend enthält Mischung B bevorzugt das mindestens eine Diisocyanat in einer Menge von 1 bis 94 Gew.-%, besonders bevorzugt 9 bis 86 Gew.-%, bezogen auf die Mischung B.

Schritt (C) des erfindungsgenäßen Verfahrens umfasst die destillative Abtrennung des Diisocyanates aus Mischung B aus Schritt (B), um das aufgereinigte Umsetzungsprodukt des mindestens einen Diisocyanates zu erhalten.

Verfahren zur destillativen Aufreinigung von Reaktionsgemischen mindestens eines Diisocyanates sind dem Fachmann an sich bekannt.

Mischung B, die in Schritt (C) des erfindungsgemäßen Verfahrens destillativ behandelt wird, enthält das mindestens eine Umsetzungsprodukt des mindestens einen Diisocyanates, das mindestens eine Diisocyanat und gegebenenfalls noch weitere Nebenprodukte, die von der jeweils durchgeführten Reaktion abhängen. Bevorzugt enthält Mischung B nur das mindestens eine Umsetzungsprodukt des mindestens einen Diisocyanates und das mindestens eine Diisocyanat. In Schritt (C) des erfindungsgemäßen Verfahrens wird demnach bevorzugt das mindestens eine Diisocyanat destillativ abgetrennt, um das mindestens eine Umsetzungsprodukt von dem überschüssigen mindestens einen Diisocyanat zu befreien.

Da das mindestens eine Diisocyanat in einer bevorzugten Ausführungsform des erfindungsgemäßen Verfahrens bevorzugt einen niedrigeren Siedepunkt aufweist als das mindestens eine Umsetzungsprodukt, wird bevorzugt das mindestens eine Diisocyanat destillativ von dem mindestens einen Umsetzungsprodukt abgetrennt.

Die Destillation in Schritt (C) des erfindungsgemäßen Verfahrens kann im Allgemeinen nach allen dem Fachmann bekannten Verfahren erfolgen.

Bevorzugt betrifft die vorliegende Erfindung das erfindungsgemäße Verfahren, wobei die destillative Abtrennung in Schritt (C) bei einer Temperatur von 105 bis 235 °C, bevorzugt 110 bis 160 °C, erfolgt.

In einer bevorzugten Ausführungsform erfolgt Schritt (C) des erfindungsgemäßen Verfahrens mittels Molekulardestillation, beispielsweise mit Hilfe eines Kurzwegverdampfers, Dünnschichtverdampfers, Fallfilmverdampfers oder Kombinationen davon. Insbesondere bevorzugt erfolgt Schritt (C) des erfindungsgemäßen Verfahrens in einer Kombination aus einem Vorverdampfer und einem Hauptverdampfer. Bevorzugt liegt die Temperatur im Vorverdampfer um 5 bis 20 °C, besonders bevorzugt 5 bis 15 °C, höher als im Hauptverdampfer. Bevorzugt ist der Druck im Vor- und Hauptverdampfer gleich.

Der Druck kann in Schritt (C) des erfindungsgemäßen Verfahrens im Allgemeinen durch den Fachmann so gewählt werden, dass, in Abhängigkeit von der gewählten Temperatur, das mindestens eine Diisocyanat abdestilliert werden kann. Die vorliegende Erfindung betrifft bevorzugt das erfindungsgemäße Verfahren, wobei die destillative Abtrennung in Schritt (C) bei einem Druck von 0,01 bis 10 mbar (a), bevorzugt 0,1 bis 1 mbar (a), erfolgt.

Schritt (C) des erfindungsgemäßen Verfahrens wird bevorzugt so durchgeführt, dass zum einen das gewünschte Produkt in einer möglichst hohen Reinheit, d.h. möglichst frei von mindestens einem Diisocyanat, und zum zweiten das mindestens eine Diisocyanat in möglichst hoher Reinheit erhalten werden. Die vorliegende Erfindung betrifft daher bevorzugt das erfindungsgemäße Verfahren, wobei das in Schritt (C) erhaltene aufgereinigte mindestens eine Umsetzungsprodukt des mindestens einen Diisocyanates einen Gehalt an mindestens einem Diisocyanat von 0,001 bis 0,5 Gew.-%, bezogen auf das Umsetzungsprodukt, aufweist.

Des Weiteren betrifft die vorliegende Erfindung das erfindungsgemäße Verfahren, wobei das in Schritt (C) abgetrennte mindestens eine Diisocyanat in einer Reinheit von mindestens 96 Gew.-%, besonders bevorzugt mindestens 97 Gew.-% erhalten wird. Bevorzugt liegt die Reinheit bei höchstens 99,99 Gew.-%.

Für den besonders bevorzugten Fall, dass als Diisocyanat 1,6-Hexamethylendiisocyanat eingesetzt wird, weist das gemäß der vorliegenden Erfindung in Schritt (C) erhaltene Destillat, d.h. 1,6-Hexamethylendiisocyanat (HDI), bevorzugt einen NCO-Gehalt von mindestens 49,0 Gew.-%, besonders bevorzugt mindestens 49,1 Gew.-%, auf. Bevorzugt liegt der NCO-Gehalt bei höchstens 50 Gew.-%.

Gemäß der vorliegenden Erfindung weist das in Schritt (C) erhaltene Produkt, d.h. bevorzugt das mindestens eine Umsetzungsprodukt des mindestens einen Diisocyanates, bevorzugt einen Rest-Diisocyanat-Gehalt von höchstens 0,5 Gew.-%, bevorzugt höchstens 0,3 Gew.-%, auf. Bevorzugt liegt der NCO-Gehalt bei mindestens 0,01 Gew.-%.

Gemäß der vorliegenden Erfindung weist das in Schritt (C) erhaltene Produkt, d.h. bevorzugt das mindestens eine Umsetzungsprodukt des mindestens einen Diisocyanates, bevorzugt einen Gehalt an Verbindungen mit einem Molekulargewicht von weniger als 1000 g/mol von 0,1 bis 50 Gew.-%, besonders bevorzugt 0,5 bis 10 Gew.-%, auf.

Gemäß der vorliegenden Erfindung weist das in Schritt (C) erhaltene Produkt, d.h. bevorzugt das mindestens eine Umsetzungsprodukt des mindestens einen Diisocyanates, bevorzugt eine Viskosität von 500 bis 100000 mPas, besonders bevorzugt 1000 bis 50000 mPas, auf.

Das in Schritt (C) des erfindungsgemäßen Verfahrens abgetrennte mindestens eine Diisocyanat kann erfindungsgemäß besonders vorteilhaft in die Synthese von weiterem mindestens einem Umsetzungsprodukt des mindestens einen Diisocyanates gemäß Schritt (A) oder zur Verdünnung der Reaktionslösung gemäß Schritt (B) des erfindungsgemäßen Verfahrens eingesetzt werden.

Die vorliegende Erfindung betrifft daher bevorzugt das erfindungsgemäße Verfahren, wobei das in Schritt (C) destillativ abgetrennte mindestens eine Diisocyanat zumindest teilweise zur Herstellung des in Mischung A vorhandenen Umsetzungsproduktes verwendet wird.

Des Weiteren betrifft die vorliegende Erfindung bevorzugt das erfindungsgemäße Verfahren, wobei das in Schritt (C) destillativ abgetrennte mindestens eine Diisocyanat zumindest teilweise in Schritt (B) eingesetzt wird.

Überraschenderweise wurde gefunden, dass die Reinheit des mindestens einen Diisocyanates, welches in dem erfindungsgemäßen Verfahren in Schritt (C) abgetrennt wird, höher ist als die Reinheit von mindestens einem Diisocyanat, welches durch Destillation erhalten wird, ohne dass zuvor, gegebenenfalls weiteres, Diisocyanat zugegeben worden ist. Der beobachtete Effekt geht über den reinen Verdünnungseffekt hinaus. Dass dies auf eine überraschend effizientere destillative Trennung zurückzuführen ist, zeigt sich auch am höheren Anteil an Oligomeren kleiner 1000 g/mol, beispielsweise Dimere und Trimere, im Umsetzungsprodukt.

Die vorliegende Erfindung betrifft auch das Umsetzungsprodukt mindestens eines Diisocyanates, erhältlich durch das erfindungsgemäße Verfahren.

Insbesondere betrifft die vorliegende Erfindung das erfindungsgemäße Umsetzungsprodukt, wobei es ein NCO-terminiertes Prepolymer ist.

Weiter bevorzugt betrifft die vorliegende Erfindung das mindestens eine Umsetzungsprodukt des mindestens einen Diisocyanates, wobei es einen Rest-Diisocyanat-Gehalt von höchstens 0,5 Gew.-%, bevorzugt höchstens 0,3 Gew.-%, aufweist. Bevorzugt liegt der NCO-Gehalt bei mindestens 0,001 Gew.-%.

Weiter bevorzugt betrifft die vorliegende Erfindung das mindestens eine Umsetzungsprodukt des mindestens einen Diisocyanates, wobei es einen Gehalt an Verbindungen mit einem Molekulargewicht von weniger als 1000 g/mol von 0,1 bis 50 Gew.-%, besonders bevorzugt 0,5 bis 10 Gew.-%, aufweist.

Weiter bevorzugt betrifft die vorliegende Erfindung das mindestens eine Umsetzungsprodukt des mindestens einen Diisocyanates, wobei es eine Viskosität von 500 bis 100000 mPas, besonders bevorzugt 1000 bis 50000 mPas, aufweist.

Die vorliegende Erfindung auch die Verwendung des erfindungsgemäßen Umsetzungsproduktes zur Herstellung von Polyurethanschäumen, Polyurethanhydrogelen, Polyurethanelastomeren, Lacken und Klebstoffen.

Die vorliegende Erfindung betrifft auch ein Verfahren zur Herstellung von Polyurethanschäumen, wobei eine Zusammensetzung umfassend ein erfindungsgemäßes Umsetzungsprodukt, Wasser, optional heterocyclische, 4-Ring- oder 6-Ring-Oligomere von niedermolekularen Diisocyanaten mit einer Molmasse von 140 bis 278 g/mol, optional Katalysatoren, optional Salze schwacher Säuren, deren korrespondierende freie Säuren in Wasser bei 25 °C einen pKS-Wert von ≥ 3,0 und ≤ 14,0 aufweisen, optional Tenside, optional ein- oder mehrwertige Alkohole oder Polyole, optional hydrophile Polyisocyanate, bereitgestellt, aufgeschäumt und ausgehärtet wird.

Verfahren zur Herstellung von Polymerschäumen sind dem Fachmann an sich bekannt und beispielsweise beschrieben in US 7,790,778 B2 oder EP 2 585 121 B1.

Die erfindungsgemäßen Beispiele und die Vergleichsbeispiele sollen die vorliegende Erfindung näher beschreiben, ohne einschränkend ausgelegt zu werden.

### Beispiele:

Zu einem Gemisch aus 1680 g 1,6-Hexamethylendiisocyanat (HDI) und 5,0 g Dibutylphosphat wurde bei 80 °C innerhalb von 30 min 2960 g eines Polyalkylenoxides mit einer Molmasse von 591 g/mol und einer OH-Zahl 190 mg KOH/g, gestartet auf 1,3-Propylenglycol und mit einem Ethylenoxidgewichtsanteil von 87%, zugetropft und für 3,5 h nachgerührt bis ein NCO-Gehalt von 9,1% erreicht wurde.

Für die einzelnen Versuche wurde diese Mischung jeweils mit HDI gemäß Tabelle 1 verdünnt, um die entsprechenden Ausgangsmischungen (AM) zu erhalten. Die Mischung, die aus der oben genannten Synthese hervorgegangen ist (Versuche V1, V2 und V3), und die Ausgangsmischungen (Versuche 4, 5, 6, 7, 8 und 9) wurden bei den in Tabelle 1 genannten Temperaturen (VV: Vorverdampfer, HV: Hauptverdampfer) und jeweils einem Druck von 0,7 mbar (a) destilliert. Von den erhaltenen Destillaten bzw. den Destillationsrückständen, die das jeweilige Produkt darstellen, wurden anschließend jeweils der NCO-Gehalt des Destillates, der HDI-Gehalt des Destillates, der NCO-Gehalt des Produktes, die Viskosität des Produktes, das Gewichtsmittel Molekulargewichtes (Mw) des Produktes, den Rest-HDI-Gehalt des Produktes und der Anteil an Verbindungen mit einem Molekulargewicht kleiner 1000 g/mol nach den unten angegebenen Methoden bestimmt.

Die genannten Messwerte werden nach den folgenden Methoden bestimmt:
Sofern nicht abweichend gekennzeichnet, beziehen sich alle Prozentangaben auf das Gewicht.

Die Bestimmung der Viskosität erfolgte bei 23 °C und wurde nach DIN 53019 durchgeführt.

Die NCO-Gehalte wurden volumetrisch gemäß DIN-EN ISO 11909 bestimmt.

Das gewichtsmittlere Molekulargewicht (Mw), der Anteil kleiner 1000 g/mol und der HDI-Gehalt des Destillates wurden per Gelpermeationschromatographie (GPC) im Lösungsmittel THF gemäß DIN 55672-1 bestimmt.

Die Bestimmung des Rest-HDI-Gehaltes erfolgte per Gaschromatographie gemäß DIN EN ISO 10283.

**Tabelle 1:**

| **Versuch** | **Zugegebenes HDI [Gew.-%]** | **Viskosität der Ausgangsmischung [mPas]** | **Destillationstemperatur (VV/HV) [°C]** | **NCO-Gehalt des Destillates [%]** | **HDI-Gehalt des Destillates [%]** | **NCO-Gehalt des Produktes [%]** | **Viskosität des Produktes [mPas]** | **Mw des Produktes [%]** | **Rest-HDI-Gehalt des Produktes [%]** | **Gehalt an Verbindungen mit M < 1000 g/mol [%]¹** |
|---|---|---|---|---|---|---|---|---|---|---|
| **V1** | 0 | 1780 | 130/120 | 48,9 | 95 | 5,0 | 4330 | 3280 | 0,01 | 5,9 |
| **V2** | | | 140/130 | 48,7 | 99 | 4,9 | 4430 | 3270 | 0,01 | 6,1 |
| **V3** | | | 150/140 | 48,2 | 95 | 4,9 | 4830 | 3380 | 0,02 | 5,9 |
| **4** | 11 | 857 | 130/120 | 49,5 | 97 | 5,0 | 4340 | 3250 | 0,03 | 6,0 |
| **5** | | | 140/130 | 49,2 | 96 | 5,0 | 4390 | 3260 | 0,01 | 6,3 |
| **6** | | | 150/140 | 49,0 | 98 | 5,0 | 4380 | 3260 | 0,01 | 6,1 |
| **7** | 43 | 201 | 130/120 | 49,2 | 100 | 5,2 | 4170 | 3200 | 0,04 | 6,5 |
| **8** | | | 140/130 | 49,2 | 100 | 5,2 | 4230 | 3200 | 0,02 | 6,5 |
| **9** | | | 150/140 | 49,3 | 100 | 5,1 | 4320 | 3260 | 0,01 | 6,2 |

| | | | | | | | | | | |
|---|---|---|---|---|---|---|---|---|---|---|
| V Vergleich 1 im Produkt nach der Destillation | | | | | | | | | | |

Die erfindungsgemäßen Versuche und die Vergleichsversuche zeigen deutlich, dass mit dem erfindungsgemäßen Verfahren das Destillat in besonders hoher Reinheit erhalten werden kann und somit für erneute Synthesen einsetzbar ist. Gleichzeitig erlaubt das erfindungsgemäße Verfahren eine Verdünnung des Umsetzungsproduktes, so dass dieses einfacher gefördert werden kann.

## Patentansprüche

1. Verfahren zur Aufreinigung mindestens eines Umsetzungsproduktes mindestens eines Diisocyanates umfassend mindestens die folgenden Schritte:
(A) Bereitstellen einer Mischung A mindestens enthaltend das mindestens eine Umsetzungsprodukt des mindestens einen Diisocyanates und gegebenenfalls das mindestens eine Diisocyanat,
(B) Zugabe von, gegebenenfalls weiterem, mindestens einem Diisocyanat zu Mischung A aus Schritt (A), um eine Mischung B zu erhalten,
(C) Destillative Abtrennung des mindestens einen Diisocyanates aus Mischung B aus Schritt (B), um das aufgereinigte mindestens eine Umsetzungsprodukt des mindestens einen Diisocyanates zu erhalten.

2. Verfahren nach Anspruch 1, **dadurch gekennzeichnet, dass** Mischung A erhalten wird durch Trimerisierung des mindestens einen Diisocyanates, Umsetzung des mindestens einen Diisocyanates mit Polyolen unter Erhalt von NCO-terminierten Prepolymeren, Harnstoffbildung, Urethanisierung, Biuretisierung, Allophanatisierung, Carbodiimidisierung, Uretdionbildung, Uretoniminbildung, Oxazolidonbildung, Amidbildung oder Kombinationen dieser Reaktionen.

3. Verfahren nach Anspruch 1 oder 2, **dadurch gekennzeichnet, dass** Mischung A das mindestens eine Diisocyanat in einer Menge von 0,1 bis 90 Gew.-%, bezogen auf Mischung A, enthält.

4. Verfahren nach einem der Ansprüche 1 bis 3, **dadurch gekennzeichnet, dass** Mischung B das mindestens eine Diisocyanat in einer Menge von 1 bis 94 Gew.-%, bezogen auf die Mischung B, enthält.

5. Verfahren nach einem der Ansprüche 1 bis 4, **dadurch gekennzeichnet, dass** in Schritt (B) das mindestens eine Diisocyanat in einer Menge von 1 bis 60 Gew.-%, bevorzugt 5 bis 50 Gew.-%, besonders bevorzugt 8 bis 45 Gew.-%, jeweils bezogen auf Mischung A, zugegeben wird.

6. Verfahren nach einem der Ansprüche 1 bis 5, **dadurch gekennzeichnet, dass** das in Schritt (C) erhaltene aufgereinigte mindestens eine Umsetzungsprodukt des mindestens einen Diisocyanates einen Gehalt an mindestens einem Diisocyanat von 0,001 bis 0,5 Gew.-%, bezogen auf das mindestens eine Umsetzungsprodukt, enthält.

7. Verfahren nach einem der Ansprüche 1 bis 6, **dadurch gekennzeichnet, dass** Mischung A eine Viskosität von 500 bis 50000 mPas, bevorzugt 1000 bis 10000 mPas, aufweist.

8. Verfahren nach einem der Ansprüche 1 bis 7, **dadurch gekennzeichnet, dass** Mischung B eine Viskosität von 100 bis 1400 mPas, bevorzugt 150 bis 1000 mPas, aufweist.

9. Verfahren nach einem der Ansprüche 1 bis 8, **dadurch gekennzeichnet, dass** das mindestens eine Diisocyanat ausgewählt ist aus der Gruppe bestehend aus Diisocyanaten mit aliphatisch, cycloaliphatisch, araliphatisch und/oder aromatisch gebundenen Isocyanatgruppen.

10. Verfahren nach einem der Ansprüche 1 bis 9, **dadurch gekennzeichnet, dass** mindestens eine Diisocyanat ausgewählt ist aus der Gruppe bestehend aus Hexamethylendiisocyanat (HDI), Isophorondiisocyanat (IPDI), Butylendiisocyanat (BDI), Pentamethylendiisocyanat (PDI), Bisisocyanatocyclohexylmethan (HMDI), 2,2,4-Trimethylhexamethylendiisocyanat, Bisisocyanatomethylcyclohexan, Bisisocyanatomethyltricyclodecan, Xylylendiisocyanat (XDI), Tetramethylxylylendiisocyanat, Norbornandiisocyanat, Cyclohexandiisocyanat, Toluol-2,4-diisocyanat (2,4-TDI), Toluol-2,6-diisocyanat (2,6-TDI), 2,2'-Methylendiphenyldiisocyanat (2,2'-MDI), 2,4'-Methylendiphenyldiisocyanat (2,4'-MDI), 4,4'-Methylendiphenyldiisocyanat (4,4'-MDI) und Mischungen davon.

11. Verfahren nach einem der Ansprüche 1 bis 10, **dadurch gekennzeichnet, dass** die destillative Abtrennung in Schritt (C) bei einer Temperatur von 105 bis 235 °C, bevorzugt 110 bis 160 °C, erfolgt.

12. Verfahren nach einem der Ansprüche 1 bis 11, **dadurch gekennzeichnet, dass** die destillative Abtrennung in Schritt (C) bei einem Druck von 0,01 bis 10 mbar (a), bevorzugt 0,1 bis 1mbar (a), erfolgt.

13. Verfahren nach einem der Ansprüche 1 bis 12, **dadurch gekennzeichnet, dass** das in Schritt (C) destillativ abgetrennte mindestens eine Diisocyanat zumindest teilweise zur Herstellung des in Mischung A vorhandenen mindestens einen Umsetzungsproduktes verwendet wird.

14. Verfahren nach einem der Ansprüche 1 bis 13, **dadurch gekennzeichnet, dass** das in Schritt (C) destillativ abgetrennte mindestens eine Diisocyanat zumindest teilweise in Schritt (B) eingesetzt wird.

15. Umsetzungsprodukt mindestens eines Diisocyanates, erhältlich durch das Verfahren nach einem der Ansprüche 1 bis 15.

16. Umsetzungsprodukt nach Anspruch 15, **dadurch gekennzeichnet, dass** es ein NCO-terminiertes Prepolymer ist.

17. Verwendung des mindestens einen Umsetzungsproduktes nach Anspruch 15 oder 16 zur Herstellung von Polyurethanschäumen, Polyurethanhydrogelen, Polyurethanelastomeren, Lacken und Klebstoffen.

18. Verfahren zur Herstellung von Polyurethanschäumen, **dadurch gekennzeichnet, dass** eine Zusammensetzung umfassend mindestens ein Umsetzungsprodukt nach Anspruch 15 oder 16, Wasser, optional heterocyclische, 4-Ring- oder 6-Ring-Oligomere von niedermolekularen Diisocyanaten mit einer Molmasse von 140 bis 278 g/mol, optional Katalysatoren, optional Salze schwacher Säuren, deren korrespondierende freie Säuren in Wasser bei 25 °C einen pKS-Wert von ≥ 3,0 und ≤ 14,0 aufweisen, optional Tenside, optional ein- oder mehrwertige Alkohole oder Polyole, optional hydrophile Polyisocyanate, bereitgestellt, aufgeschäumt und ausgehärtet wird.
